# EUROPÄISCHE PATENTSCHRIFT

(11) **EP 0 877 037 B1**
(45) Veröffentlichungstag und Bekanntmachung des Hinweises auf die Patenterteilung: **27.06.2001**
(21) Anmeldenummer: 98107926.2
(22) Anmeldetag: 30.04.1998
(51) Int. Cl.: C08F 290/14, C09D 183/04, C09D 183/14

(54) **Verfahren zur Herstellung von Organosiloxanmassen mit (Methyl)styrolgruppen durch Härtung mit UV-Strahlung**
Process for the preparation of organopolysiloxane compositions having (methyl)styrene groups by curing with UV light
Procédé de préparation de compositions organopolysiloxanes à groupes (méthyl)styrène par durcissement aux ultraviolets

(30) Priorität: 02.05.1997 DE 19718634
(43) Veröffentlichungstag der Anmeldung: 11.11.1998
(73) Patentinhaber: Wacker-Chemie GmbH, 81737 München (DE)
(72) Erfinder: Dauth, Jochen, Dr., 84489 Burghausen (DE); Wolferseder, Josef, 84367 Tann (DE); Deubzer, Bernward, Dr., 84489 Burghausen (DE)
(74) Vertreter: Deffner-Lehner, Maria, Dr.

(56) Entgegenhaltungen:
- EP-A- 0 176 481
- EP-A- 0 603 270
- EP-A- 0 618 237
- EP-A- 0 686 652
- DE-A- 4 028 844
- US-A- 5 118 723
- US-A- 5 241 034
- METHODEN DER ORGANISCHEN CHEMIE (Houben-Weyl) Band E20, 1987, Thieme Verlag, Stuttgart; DE, Seiten 1242, 1243
- DATABASE WPI, Woche 9111, Derwent Publications Ltd., London, GB, Klasse , AN 1991-077413 & JP 3024130
- DATABASE WPI, Woche 9318, Derwent Publications Ltd., London, GB, Klasse , AN 1993-149255 & JP 5086138

## Beschreibung

Die Erfindung betrifft ein Verfahren zur Herstellung (Methyl)styrolgruppen aufweisender Organosiloxanmassen durch UV-Härtung, sowie ein Verfahren zu ihrer Aufbringung und Überzüge und Formkörper, die aus ihnen hergestellt werden.

Vernetzbare Organosiliconpräpolymere mit alternierenden Kohlenwasserstoffresten und cyclischen Polysiloxanen sind in der EP 423688 (Hercules Incoporated) beschrieben, wobei der Präpolymeraufbau durch nicht aromatische Polyene mit cyclischen Polysiloxanen, die drei oder mehr ≡SiH-Gruppen enthalten, erfolgt. Eine weitere Funktionalisierung kann dann durch Einsatz zusätzlicher Bisalkenylverbindungen erreicht werden.

Siloxancopolymere mit Alkenylgruppen sind in der US 5,241,034 (Wacker-Chemie GmbH) beschrieben.

Die Polymerisation von (Methyl)styrol und α-Methylstyrol ist seit langem Stand der Technik und dem Fachmann bekannt.

Das generelle Verfahren der initiatorfreien Photopolymerisation von elektronenreichen und -armen Verbindungen über Charge-Transfer - Komplexe ist aus der EP 618237 (Fusion Systems Corp.) bekannt.

In EP 686 652 werden radikalisch vernetzbare Alkenylethersiloxanmassen beschrieben, die (A) oligomere ode polymere Organosiliciumverbindungen mit durchschnittlich meh als einer Alkenyloxygruppe und (B) Malein- monomere und/oder Fumarsäureverbindungen enthalten.

In DE 4028844 werden wärmehärtbare Harzzusammensetzungen beschrieben, die ein Maleinimid mit wenigstens einer N-substituierten Maleinimidgruppe im Molekül und eine Siliconverbindung mit konjugierter Doppelbindung enthalten.

Aufgabe der Erfindung ist es, ein neues Verfahren zur Herstellung (Methyl)styrolgruppen aufweisender Organosiliciummassen bereitzustellen, die in Verbindung mit gegebenenfalls Initiatoren und/oder Comonomeren durch zufuhr energiereicher Strahlung erhalten werden können und verbesserte Eigenschaften aufweisen. Diese Aufgabe wird durch die Erfindung gelöst.

Gegenstand der Erfindung ist ein Verfahren zur Herstellung (Methyl)styrol aufweisender Organosiloxanwassen auf der Basis von
A) (Methyl)styrolgruppen aufweisenden oligomeren oder polymeren Organosiliciumverbindungen mit mindestens einer Einheit der Formel

   GR_{C}SiO_{(4-c-1)/2} (I)

   oder
   mindestens einer Einheit der Formel (I) und mindestens einer Einheit der Formel

   O_{(4-c-1/2)}R_{c}Si-G¹-R_{c}SiO_{(4-c-1)/2} (II)
B) oligomeren oder polymeren Organosiliciumverbindungen mit durchschnittlich mehr als einer Alkenyloxy-, Maleinat, Fumarat-, Maleinimid- oder (Meth)acrylatgruppe,
   wobei R gleiche oder verschiedene Kohlenwasserstoffreste, die halogeniert oder nicht halogeniert sein können, mit 1 bis 900 Kohlenstoffatom(en) je Rest oder einen Rest der Formel

   -R'-[OCH₂CH₂]ₒ-[OCH(CH₃)CH₂]ₚ-[O(CH₂)₄]_{q}-OR"

   bedeutet, wobei
   R' ein linearer oder verzweigter Alkylenrest vorzugsweise mit 1 bis 8 Kohlenstoffatom(en) je Rest,
   R'' ein Wasserstoffatom, ein Alkylrest mit vorzugsweise 1 bis 8 Kohlenstoffatom(en) je Rest oder ein Rest der Formel -CO-
   R''' ist, wobei R''' ein Alkylrest mit vorzugsweise 1 bis 8 Kohlenstoffatom(en) je Rest ist,
   G ein Rest der Formel (IV) -R²-(Phenyl), der mit [-Y_{(5-d)}] und (-R³_{d}) substituiert ist, mit der Maßgabe, daß mindestens ein Rest R³ enthalten ist und
   G¹ ein Rest der Formel (V) -(Phenyl)-(R²)_{d}- ist, der mit [-Y_{4-d}] substituiert ist, wobei
   R² einen linearen oder verzweigten, substituierten oder nicht substiuierten Alkylenrest mit vorzugsweise 2 bis 8 Kohlenwasserstoffatom(en),
   R³ einen Vinylrest oder Isopropenylrest darstellt,
   Y gleich oder verschieden sein kann, ein Wasserstoffatom, die gleiche Bedeutung von R hat, wobei R die oben angegebene Bedeutung hat, oder einen Rest der Formel -OR¹ darstellt, wobei
   R¹ die oben angegebene Bedeutung hat und
   c 0, 1 oder 2, durchschnittlich 0,0 bis 2,0
   d 1, 2 oder 3
   o 0 oder eine ganze Zahl von 1 bis 100, bevorzugt 0 oder eine ganze Zahl von 3 bis 35,
   p 0 oder eine ganze Zahl von 1 bis 100 bevorzugt 0 oder eine ganze Zahl von 3 bis 35 und
   q 0 oder eine ganze Zahl von 1 bis 100 bevorzugt 0 oder eine ganze Zahl von 3 bis 35 ist, mit der Maßgabe, daß die Summe o+p+q>0 ist.

   Als weitere Komponenten können
C) gegebenenfalls Radikale, Anionen oder Kationen bildende Initiatoren
D) gegebenenfalls Inhibitoren zur Regelung der Topfzeit, enthalten sein.

Weitere (Methyl)styrolgruppen aufweisende Organosiloxanmassen können noch zusätzlich Einheiten der Formel

RₐSi(OR¹)_{b}O_{4-(a+b)/2} (III)

aufweisen,
wobei R die oben dafür angegeben Bedeutung hat und
R¹ gleiche oder verschiedene Alkylreste mit vorzugsweise 1 bis 8 Kohlenstoffatom(en) je Rest, die durch ein Ethersauerstoffatom substituiert sein können, bedeutet,
a, b gleich oder verschieden 0, 1, 2 oder 3 und die Summe a + b nicht größer als 3 ist.

Beispiele für R sind vorzugsweise Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest. Bevorzugt ist der Methylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Beispiele für Reste R' sind vorzugsweise Alkylenreste der Formel

-CH₂-CH₂-, -CH₂-CH₂-CH₂-, -CH₂-CH(-CH₃)-CH₂-

Bevorzugte Reste für R'' sind vorzugsweise ein Wasserstoffatom, der Methyl- und der n-Butylrest,
bevorzugt für R''' ist der Methylrest,

Beispiele für Alkylreste R¹ sind vorzugsweise der Methyl-, Ethyl-, n-Propyl-, iso-Propyl-, 1-n-Butyl-, 2-n-Butyl-, iso-Butyl-, tert.-Butylrest. Bevorzugt sind der Methyl- und der Ethylrest. Beispiele für Alkylreste R¹, die durch ein Ethersauerstoffatom substituiert sind, sind der vorzugsweise Methoxyethyl- und Ethoxyethylrest.

Beispiele für den Rest R² sind vorzugsweise

-CH₂-CH₂- und -CH₂-CH(-CH₃)-

Beispiele für den Rest R³ sind vorzugsweise

-CH=CH₂ und -C(-CH₃)=CH₂

Beispiele für die bevorzugte erfindungsgemäße Komponente (B) sind Oganosiliciumverbindungen mit durchschnittlich mehr als einer Maleinimidgruppe, wie vorzugweise
E) Organosiliciumverbindungen mit mindestens einer Maleinimidgruppe der Formel 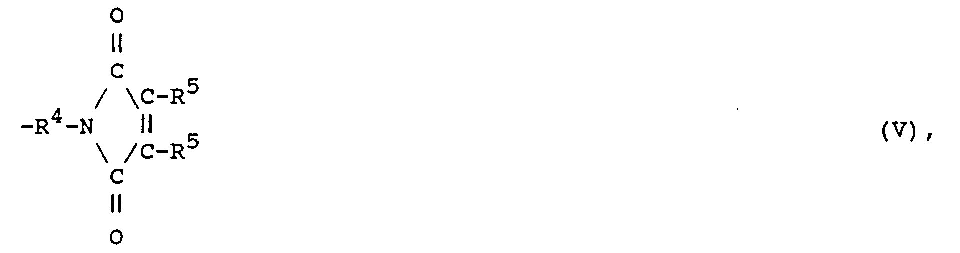 wobei
R⁴ einen zweiwertigen, gegebenenfalls substituierten Kohlenwasserstoffrest darstellt, der ein oder mehrere Ethersauerstoffatome enthalten kann, und
R⁵ gleich oder verschieden ist und ein Wasserstoffatom oder einen gegebenenfalls substituierten Kohlenwasserstoffrest mit 1 bis 18 Kohlenstoffatomen bedeutet.

Bei den hier eingesetzten Organosiliciumverbindungen (E) kann es sich um beliebige, bisher bekannte Maleinimidgruppen aufweisende Organosiliciumverbindungen, die z.B. monomer, oligomer oder polymer, linear, verzweigt oder cyclisch sein können, handeln.

Vorzugsweise handelt es sich bei den Organosiliciumverbindungen (E) um solche aus Einheiten der Formel

JₐR⁶ _{b}SiXₑO_{(4-a-b-e)/2} (VI),

wobei
R⁶ gleich oder verschieden ist, einen einwertigen, gegebenenfalls halogenierten Kohlenwasserstoffrest mit 1 bis 18 Kohlenstoffatomen bedeutet, X gleich oder verschieden ist und ein Halogenatom oder ein Rest -OR⁷ ist, wobei R⁷ einen Alkylrest mit 1 bis 18 Kohlenstoffatomen je Rest, der durch ein oder mehrere Ethersauerstoffatome substituiert sein kann, bedeutet,
J einen Rest der Formel (V) darstellt,
a 0 oder 1 ist,
b 0, 1, 2 oder 3 ist und
e 0, 1, 2 oder 3 ist,
mit der Maßgabe, daß die Summe a+b+e≤4ist und mindestens ein Rest J je Molekül enthalten ist.

Vorzugsweise ist bei den hier eingesetzten Organosiliciumverbindungen (E) die Gruppierung der Formel (V) über eine SiC-Verknüpfung an das Siliciumatom geknüpft.

Bei den hier eingesetzten Organosiliciumverbindungen (E) aus Einheiten der Formel (VI) hat a bevorzugt einen durchschnittlichen Wert von 0,001 bis 1,0, b bevorzugt einen durchschnittlichen Wert von 0 bis 3,0 und e bevorzugt einen durchschnittlichen Wert von 0,0 bis 3,0 und die Summe a+b+e bevorzugt einen durchschnittlichen Wert von 0,1 bis 4,0.

Die hier eingesetzten Organosiliciumverbindungen (E) besitzen ein durchschnittliches Molekulargewicht (Mₙ) von vorzugsweise 200 bis 1 000 000 g/mol, besonders bevorzugt 1 000 bis 50 000 g/mol.

Die hier eingesetzten Organosiliciumverbindungen (E) besitzen eine Viskosität von vorzugsweise 10 bis 1 000 000 mm²/s bei 25°C, bevorzugt 20 bis 100 000 mm²/s bei 25°C.

Beispiele für Reste R⁶ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert. Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylreste und Methylcyclohexylreste; Alkenylreste, wie der Allyl-, Methallyl- und Hexenylrest; Alkinylreste, wie der Propargylrest; Arylreste, wie der Phenyl-, Naphthyl- und Anthryl- und Phenanthrylrest; Alkarylreste, wie o-, m-, p-Tolylreste; Xylylreste und Ethylphenylreste; und Aralkylreste wie der Benzylrest, der α- und β-Phenylethylrest.

Beispiele für halogenierte Reste R⁶ sind Halogenalkylreste, wie der 3,3,3-Trifluor-n-propylrest, der 2,2,2,2',2',2'-Hexafluor-isopropylrest, der Heptafluorisopropylrest und Halogenarylreste, wie der o-, m- und p-Chlorphenylrest.

Bevorzugt handelt es sich bei Rest R⁶ um den Methyl- und Phenylrest, wobei der Methylrest besonders bevorzugt ist.

Beispiele für Alkylreste R⁷ sind die für Rest R⁶ dafür angegebenen Beispiele sowie der Methoxyethyl- und Ethoxyethylrest.

Bevorzugt handelt es sich bei Rest R⁷ um den Methyl-, Ethyl-, iso-Propyl- und Methoxyethylrest, wobei Methyl- und Ethylrest bevorzugt sind.

Bei Rest X gleich Halogenatom handelt es sich bevorzugt um das Chloratom.

Bevorzugt handelt es sich bei Rest X um einen Methoxy- und Ethoxyrest.

Beispiele für Reste R⁴ sind Alkylenreste, wie -CH₂-CH₂-, -(CH₂)₃-, -(CH₂)₄- und -CH₂-CH(CH₃)-CH₂-, Alkenylenreste, wie -CH=CH-CH₂-, aromatische Reste, wie -CH₂-CH₂-C₆H₄- und -(CH₂)₃-C₆H₄-, sowie solche der Formeln

-(CH₂)₃O-(CH₂CH₂O)_{w}CH₂CH₂- (VII),

-CH=CH-CH₂O(CH₂CH₂O)_{w}CH₂CH₂- (VII'),

-(CH₂)₃O-(CH(CH₃)CH₂O)_{w}CH₂CH₂- (VII'')

und

-CH=CH-CH₂O-(CH(CH₃)CH₂O)_{w}CH₂CH₂-, (VII'''),

wobei w jeweils 0 oder eine ganze Zahl von 1 bis 15 ist, wie -CH₂CH₂-O-CH₂CH₂CH₂-.

Bevorzugt handelt es sich bei Rest R⁴ um zweiwertige gegebenenfalls mit Halogenatomen substituierte Kohlenwasserstoffreste mit 1 bis 35 Kohlenstoffatomen, die durch ein oder mehrere Ethersauerstoffatome unterbrochen sein können.

Besonders bevorzugt handelt es sich bei Rest R⁴ um Alkylenreste und Alkenylenreste mit jeweils 1 bis 35 Kohlenstoffatomen, die durch ein oder mehrere Sauerstoffatome unterbrochen sein können, insbesondere um die Reste -(CH₂)₃-, -CH=CH-CH₂-, -CH₂-CH₂-C₆H₄- und -CH=CH-CH₂O(CH₂CH₂O)_{w}CH₂CH₂- mit w gleich der obengenannten Bedeutung.

Beispiele für Reste R⁵ sind Wasserstoffatom und die für R⁶ angegebenen Beispiele.

Bevorzugt ist der Rest R⁵ ein Wasserstoffatom, der Methyl- oder der Phenylrest, wobei Wasserstoffatom besonders bevorzugt ist.

Beispiele für Reste J sind 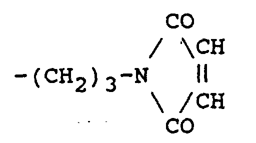 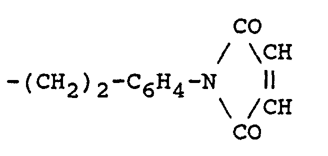 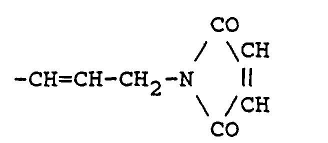 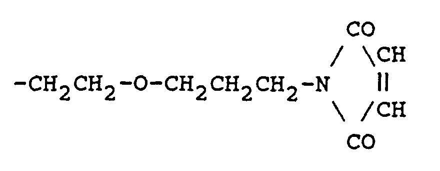 und 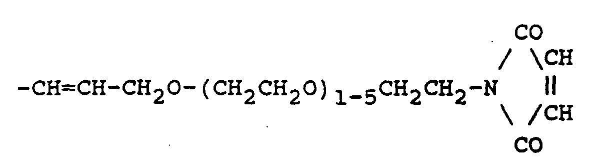 wobei 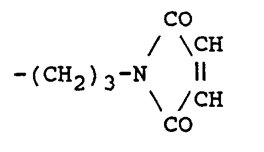 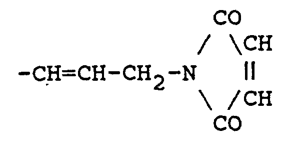 und 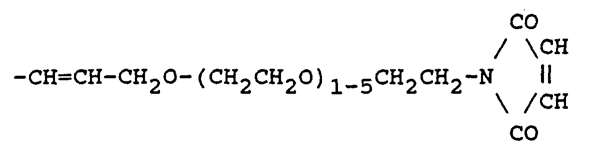 bevorzugt und 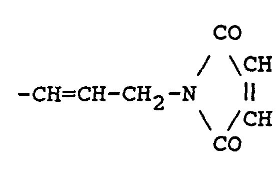 sowie 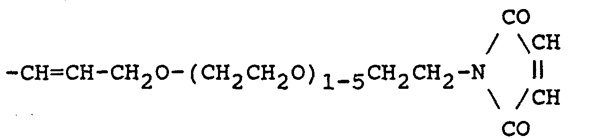 besonders bevorzugt sind.

Besonders bevorzugt handelt es sich bei den Maleinimidgruppen aufweisenden Organosiliciumverbindungen (E) um solche der Formel

J_{g}R⁶ _{3-g}SiO(SiR⁶ ₂O)ₙ(SiR⁶JO)ₘSiR⁶ _{3-g}J_{g} (VIII),

wobei J und R⁶ die oben dafür angegebene Bedeutung haben,
g gleich oder verschieden sein kann und 0 oder 1 ist,
n 0 oder eine ganze Zahl von 1 bis 1500 ist und
m 0 oder eine ganze Zahl von 1 bis 200 ist, mit der Maßgabe, daß mindestens ein Rest J je Molekül enthalten ist und n Einheiten (SiR⁶₂O) und m Einheiten (SiR⁶JO) beliebig im Molekül verteilt sein können.

Beispiele für die hier eingesetzten Maleinimidgruppen aufweisenden Organosiliciumverbindungen (E) sind

Me₃SiO[(SiMe₂O)₂₅₋₄₀SiJ¹MeO]₁₋₁₀SiMe₃

und

J¹-SiMe₂O(SiMe₂O)₅₀₋₆₀SiMe₂-J¹

mit J¹ gleich

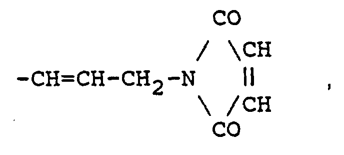

Me₃SiO[(SiMe₂O)₂₅₋₄₀SiJ²MeO]₁₋₁₀SiMe₃

J²-SiMe₂O(SiMe₂O)₅₀₋₆₀SiMe₂-J²

mit J² gleich

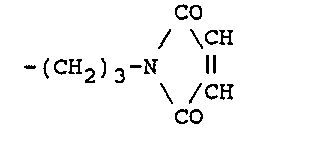

Me₃SiO[(SiMe₂O)₂₅₋₄₀SiJ³MeO]₁₋₁₀SiMe₃

mit J³ gleich 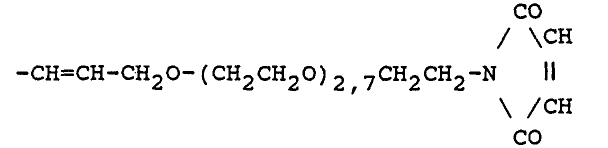 wobei
Me gleich Methylrest bedeutet.

Bei der erfindungsgemäß eingesetzten Verbindung (B) kann es sich um eine einzelne Art, wie auch um ein Gemisch aus verschiedenen Arten derartiger Verbindungen handeln.

Bevorzugt als (Methyl)styrolgruppen aufweisende Siloxancopolymere sind solche, die
a) Siloxaneinheiten der Formel

   R₂SiO (I')

   oder

   R₃SiO_{1/2} (I'')
b) je Molekül mindestens eine Siloxaneinheit der Formeln

   GRSiO oder GR₂SiO_{1/2} (II')

   und/oder je Molekül
   mindestens eine Einheit der Formel

   O_{1/2}R₂SiG¹R₂SiO_{1/2} (III')

   oder

   ORSiG¹RSiO (IV')
enthalten, mit der Maßgabe, daß mindestens eine Einheit (II') enthalten ist.

Weitere bevorzugt als (Methyl)styrolgruppen aufweisende Siloxancopolymere sind solche der Formel

G_{f}SiR₂O(SiROG_{f})ₓ(SiR₂G_{1f}SiR₂O)_{y}(SiR₂O)_{z}SiR₂G_{f},

mit der Maßgabe, daß zumindest ein G vorhanden ist.
wobei G, G¹ und R die oben dafür angegebene Bedeutung haben und
f 0 oder 1
x 0 oder eine ganze Zahl von 1 bis 200
y 0 oder eine ganze Zahl von 1 bis 50
z 0 oder eine ganze Zahl von 1 bis 1000
Die Reihenfolge der Gruppen (SiROG)ₓ, (SiR₂G₁SiR₂O)_{y} oder (SiR₂O)_{z} ist beliebig.

Die (Methyl) styrolgruppen aufweisenden Organosiliciummassen besitzen vorzugsweise ein durchschnittliches Molekulargewicht von 500 bis 1 000 000 g/mol, bevorzugt, 5 000 bis 150 000 g/mol und vorzugsweise eine Viskosität von 10 bis 1 000 000 mm² · s⁻¹ bei 25 °C.

Die Erfindung betrifft ein Verfahren zur Herstellung (Methyl)styrolgruppen aufweisender Organosiloxanmassen.

Dabei können gegebenenfalls
C) Radikale, Anionen oder Kationen bildende Initiatoren und
D) Inhibitoren zur Regelung der Topfzeit anwesend sein,

Die erfindungsgemäß eingesetzten Massen können die Organosiliciumverbindungen (A) sowie die Verbindungen (B) in einem im weiten Bereich schwankenden Verhältnis enthalten, wobei sich dieses an der Stöchiometrie dieser Verbindung orientiert. So liegt das zahlenmäßige Verhältnis von der Doppelbindung in Formel (IV) -R²-(Phenyl)-Gruppen der Verbindung (A), die mit [-Y_{(5-d)}] und (-R³_{d}) substituiert ist,
zur Doppelbindung - in den Verbindungen (B) bevorzugt im Bereich 0,1 bis 20, besonders bevorzugt von 0,3 bis 10, insbesondere von 0,5 bis 7.

Die erfindungsgemäß eingesetzten Massen können nun unter dem Einfluß energiereicher Strahlung vernetzt werden. Viele Strahlungsarten sind hierbei geeignet, wie etwa Elektronenstrahlen, γ- Strahlen, Röntgenstrahlen, UV-Licht, wie z.B. solches mit Wellenlängen im Bereich von 200 bis 400 nm, und sichtbares Licht, wie z.B. solches mit einer Wellenlänge von 400 bis 600 nm, also sogenanntes "Halogenlicht". Ultraviolettlicht kann z.B. in Xenon-, Quecksilbernieder-, Quecksilbermittel- oder Quecksilberhochdrucklampen und Excimerlampen erzeugt werden. Ein weiteres bevorzugtes Verfahren ist ein Verfahren zur Vernetzung der erfindungsgemäß eingesetzten (Methyl)styrolsiloxanmassen durch Bestrahlung mit energiereicher Strahlung.

Vorzugsweise handelt es sich bei der energiereichen Strahlung, durch welche die erfindungsgemäß eingesetzten Massen vernetzt werden, um UV-Licht im Bereich von 200 - 400 nm oder um Elektronenstrahlen, wie vorzugsweise Licht monochromatischer Excimerlampen oder Quecksilbermitteldrucklampen.

Des weiteren ist es auch möglich die photochemische und thermische Vernetzung zu kombinieren.

Die erfindungsgemäß eingesetzten (Methyl) styrolsiloxanmassen können gegebenenfalls Radikale bildende Initiatoren (C) enthalten. Obwohl eine geeignete Kombination von Komponente (A) mit Komponente (B) auch ohne den optionellen Bestandteil (C) gehärtet werden kann, wie z.B. durch Elektronenstrahl oder Excimerlampen, bewirkt ein Zusatz von Radikalinitiatoren, die eingestrahlte Energie absorbieren und daraufhin in Radikale zerfallen, eine Erhöhung der Vernetzungsgeschwindigkeit.

Beispiele für gegebenenfalls eingesetzte Initiatoren (C) bei radikalischer Vernetzung sind vorzugsweise Benzoinether, wie Benzoin-n-butylether, Benzilketale, wie Benzildimethylketal, α,α -Dialkoxyaceto-phenone, wie α,α-Diethoxyacetophenon, α-Hydroxyalkylphenone, wie 1-Hydroxycyclohexylphenylketon und 2-Hydroxy-2-methyl-1-phenylpropan-1-on, α-Aminoalkylphenone, wie 2-Methyl-1-[4-(methylthio)phenyl]-2-morpholinopropan-1-on, Acylphosphinoxide, wie 2,4,6-Trimethylbenzoyl-diphenylphosphinoxid und Bisacylphosphinoxide, wie Bis(2,6-dimethoxybenzoyl)-isooctylphosphinoxid.

Als Initiator (C) bei radikalischer Vernetzung sind vorzugsweise Ketone, wie Benzophenon, 1-Chlor-4-propoxythioxanthon, Isopropylthioxanthon und Thioxanthon, ebenfalls wirksam, besser jedoch in Kombination mit Aminocoinitiatoren, wie Triethanolamin oder 2-n-Butoxyethyl-4-(dimethylamino)benzoat, wobei auch Gemische aus verschiedenen Arten derartiger Initiatoren eingesetzt werden können.

Beispiele für gegebenenfalls Kationen oder Protonen bildende Initiatoren (C) sind vorzugsweise jegliche Art von Sulfonium-, Iodonium- oder Diazoniumsalze, Komplexe aus BF₃ , AlCl₃, TiCl₄ und SnCl₄ mit Wasser oder Alkoholen, Protonensäuren wie HCl und H₂SO₄, wobei auch Gemische aus verschiedenen Arten derartiger Initiatoren eingesetzt werden können.

Beispiele für gegebenenfalls Anionen bildende Initiatoren (C) sind vorzugsweise Alkalimetalle und deren organische Verbindungen, Phenyllithium, Butyllithium, Phenylnatrium, Triphenylmethylkalium oder sogenannte Alfinkatalysatoren, wobei auch Gemische aus verschiedenen Arten derartiger Initiatoren eingesetzt werden können.

Bei den erfindungsgemäß gegebenenfalls eingesetzten Initiatoren (C) kann es sich um eine einzige Art wie auch um ein Gemisch aus verschiedenen Arten derartiger Initiatoren handeln.

Vorzugsweise werden Initiatoren (C) vorzugsweise in Mengen von 0,001 bis 5 Gew.-%, besonders bevorzugt 0,01 bis 3 Gew.-%, jeweils bezogen auf das Gesamtgewicht von (A) und (B), eingesetzt. Aus Gründen der besseren Handhabung ist es bevorzugt, ein Gemisch aus (A) + (B) + (C) mit geringen Mengen einer inhibierenden Komponente (D) zu versetzen, um beispielsweise vorzeitige Vernetzung einer verwendungsfähigen Formulierung während deren Lagerung zu verhindern. Aufgabe dieser Stoffe ist es im allgemeinen, entstehende Radikale, Kationen oder Anionen unwirksam zu machen und damit den Beginn z.B. einer radikalischen, anionischen oder katonischen Polymerisation von Gruppen der Struktur:
(IV) -R²-(Phenyl), die mit [-Y_{(5-d)}] und (-R³_{d}) substituiert ist, mit Molekülen der Komponente (B) zu verzögern oder zu verhindern.

Werden durch Bestrahlung oder erhebliche Erwärmung große Mengen an Radikalen, Anionen oder Kationen freigesetzt, führt dies zu einem raschen Verbrauch der Inhibitormoleküle (D), und eine Aushärtung der erfindungsgemäßen Masse setzt sehr plötzlich ein. Beispiele für gegebenenfalls eingesetzte Inhibitoren (D) sind alle gebräuchlichen, auch bisher in radikalisch ablaufenden Prozessen eingesetzte Inhibitoren (D), wie vorzugsweise Hydrochinon, 4-Methoxyphenol, 2,6-Ditert.butyl-4-methylphenol oder Pheno-thiazin. Bei dem erfindungsgemäß gegebenenfalls eingesetzten Inhibitior (D) kann es sich um eine einzelne Art wie auch ein Gemisch aus verschiedenen Arten derartiger Inhibitoren handeln. Weitere Beispiele für Inhibitoren der kationischen oder anionischen Polymerisation sind vorzugsweise Kaliumhydroxid, Kaliumsorbat, Amine, Alkohole, Säuren.

Vorzugsweise werden Inhibitoren (D) in Mengen von vorzugsweise 10 bis 10 000 ppm, besonders bevorzugt 50 bis 1000 ppm, jeweils bezogen auf das Gesamtgewicht der erfindungsgemäßen (Methyl)styrolsiloxanmassen, eingesetzt. Die Strahlungsvernetzung erfolgt vorzugsweise bei einer Temperatur von 0 bis 100 °C, besonders bevorzugt 20 bis 60 °C, und dem Druck der umgebenden Atmosphäre, d.h. 900 bis 1100 hPa.

Ein weiterer Gegenstand der Erfindung ist ein Verfahren zum Aufbringen von erfindungsgemäß eingesetzten (Methyl)styrolgruppen aufweisende Organosiloxanmassen, das dadurch gekennzeichnet ist, daß die erfindungsgemäß eingesetzten (Methyl)styrolgruppen aufweisenden Organosiloxanmassen auf einem Träger mit Strahlung behandelt werden.

Die erfindungsgemäß eingesetzten Siloxanmassen haben den Vorteil, daß Komponente (A) mit der Komponente (B) ausgezeichnet verträglich ist und daher klare Mischungen ohne Phasenseparation erhalten werden. Des weiteren haben die erfindungsgemäß eingesetzten Massen den Vorteil, daß sie auf einfache Weise und sehr leicht zu festen Überzügen oder Formkörpern vernetzen. Die erfindungsgemäß eingesetzten Massen können überall dort eingesetzt werden, wo auch bisher vernetzbare Massen auf der Basis von vernetzbaren Siloxanmassen eingesetzt wurden. Beispielsweise eignen sich die erfindungsgemäß eingesetzten Massen hervorragend zur Herstellung von festen Überzügen oder Formkörpern. Beispiele für Träger sind vorzugsweise Oberflächen, auf welche die erfindungsgemäß eingesetzten Überzüge aufgebracht werden können, sind vorzugsweise diejenigen von Papier, Holz, Kork, Kunststoffolien, z.B. Polyethylenfolien oder Polypropylenfolien, keramischen Gegenständen, Glas, einschließlich Glasfasern, Metallen, Pappen, einschließlich solcher aus Asbest, und von gewebtem und ungewebtem Tuch aus natürlichen oder synthetischen organischen Fasern. Beispiele für Formkörper sind Dichtungen, Gehäuse, Vergußmassen für Elektronikbauteile.

Das Auftragen der erfindungsgemäß eingesetzten (Methyl)styrolsiloxanmassen bzw. deren Formulierungen auf die zu überziehenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z.B. mittels einer Offsetgravurüberzugsvorrichtung, Messer- oder Rakelbeschichtung. Insbesondere eignen sich die erfindungsgemäß eingesetzten Massen zur Verwendung in abhäsiven Beschichtungsmassen.

### Beispiel 1:

66 g (0,417 mol) Diisopropenylbenzol und 0,332 g eines 1,3-Divinyl-1,1,3,3-tetramethyldisiloxanplatin(O)-Komplexes in Toluol mit einem Platingehalt (bezogen auf reines Metall) von 1 Gew.-% werden bei Raumtemperatur unter Rühren vorgelegt. Dazu werden innerhalb von zwei Stunden 100 g eines Polysiloxanes mit Trimethylsiloxy-, Hydrogendimethylsiloxy-, Dimethylsiloxy- und Hydrogenmethylsiloxyeinheiten, einer Viskosität bei 25°C von 31 mm²/s und einem an Silicium gebundenen Wasserstoffgehalt von 0,13 Gew.-% zugetropft, wobei die Temperatur auf 40°C ansteigt. Anschließend wird das Reaktionsgemisch weitere sechs Stunden bei 40°C gerührt. Nach dem Reaktionsende wird das Produkt im Hochvakuum bei 120°C bis zur Gewichtskontanz eingeengt und filtriert. Man erhält 110 g (90,2 % d. Th.) (d. T.h bedeutet der Theorie) eines klaren, gelben Öles mit einer Viskosität von 138 mm²/s bei 25°C (Poly 1).

### Generelles Verfahren zur Strahlungshärtung:

Die unten genannten Formulierungen werden mit einem Glasstab auf ein Glassine-Papier (heißkalandriertes mit Polyvinylalkohol oberflächenbehandeltes Papier, z.B Bosso 925 der Fa. Bosso) in einer Schichtdicke von ca. 2 bis 3 mm gerakelt. Die Härtung erfolgt unter einer mikrowellenangeregten Mitteldruckquecksilberlampe der Fa. Fusion mit 120 W/cm², wobei gegebenenfalls der gesamte Härtungskanal mit Stickstoff bis zu ca. 30 ppm Restsauerstoff inertisiert werden kann. Die Bestrahlungszeit kann über die Geschwindigkeit eines Laufbandes, auf dem das beschichtete Papier fixiert ist und unter der Strahlenquelle läuft, geregelt werden.

### Beispiel 3:

2 g Poly 1 (0,987 mmol - C(CH₃)=CH₂/g) und 4,2 g eines Polysiloxanes mit Trimethylsiloxy-, Dimethylsiloxy- und 3-N-Maleinimidoprop-1-enylmethylsiloxyeinheiten der Viskosität 2770 mm²/s bei 25°C (0,47 mmol -CH=CH-/g) werden gemischt. Die Härtung erfolgt unter Stickstoffinertisierung bei einer Bahngeschwindigkeit von 12,5 m/min und unter Luft bei 8,5 m/min. In beiden Fällen erhält man eine strichfreie Siliconbeschichtung.

### Beispiel 4:

2,37 g Poly 1 (0,987 mmol -C(CH₃)=CH₂/g) und 5,12 g eines Polysiloxanes mit Trimethylsiloxy- und 11-Vinyloxy-3,6,9-trioxaundecenylmethylsiloxyeinheiten (2,94 mmol -O-CH=CH₂/g) der Viskosität 54 mm²/s bei 25°C werden mit 0,15 g des in Beispiel 6 beschriebenen Sulfoniumsalzes gemischt. Die Härtung erfolgt bei einer Bahngeschwindigkeit von 8 m/min unter Stickstoff und unter Luft. In beiden Fällen erhält man eine strichfreie Siliconbeschichtung.

### Beispiel 5:

1 g Poly 1 (0,987 mmol -C(CH₃)=CH₂/g) werden mit 2,06 g eines Polysiloxanes mit Dimethylsiloxy- und Alkendiylbisoxapropylacrylatmethylsiloxyeinheiten der Viskosität 355 mm²/s bei 25°C und mit 0,1 g Darocur® 1173 (Fa. Ciba Geigy) versetzt. Die Härtung erfolgt bei einer Bahngeschwindigkeit von 18 m/min unter Stickstoff. Man erhält eine strichfreie Siliconbeschichtung.

## Patentansprüche

1. Verfahren zur Herstellung von (Methyl) styrolgruppen aufweisenden Organosiloxanmassen auf der Basis von,
A) oligomeren oder polymeren Organosiliciumverbindungen mit mindestens einer Einheit der Formel
GR_{c}SiO_{(4-c-1)/2} (I)
oder
mindestens einer Einheit der Formel (I) und mindestens einer Einheit der Formel
O_{(4-c-1/2)}R_{c}Si-G¹-R_{c}SiO_{(4-c-1)/2} (II)
B) oligomeren oder polymeren Organosiliciumverbindungen mit durchschnittlich mehr als einer Alkenyloxy-, Maleinat, Fumarat-, Maleinimid- oder (Meth)acrylatgruppe,
wobei R gleiche oder verschiedene Kohlenwasserstoffreste, die halogeniert oder nicht halogeniert sein können oder einen Rest der Formel
-R'-[OCH₂CH₂]ₒ-[OCH(CH₃)CH₂]ₚ-[O(CH₂)₄]_{q}-OR"
bedeutet, wobei
R' ein linearer oder verzweigter Alkylenrest,
R'' ein Wasserstoffatom, ein Alkylrest oder ein Rest der Formel -CO-R''' ist, wobei R''' ein Alkylrest,
G ein Rest der Formel (IV) -R²-(Phenyl), der mit [-Y_{(5-d)}] und (-R³_{d}) substituiert ist, mit der Maßgabe, daß mindestens ein Rest R³ enthalten ist und
G¹ ein Rest der Formel (V) -(Phenyl)-(R²)_{d}- ist, der mit [-Y₄₋ _{d}] substituiert ist, wobei
R² einen linearen oder verzweigten, substituierten oder nicht substituierten Alkylenrest ,
R³ einen Vinylrest oder Isopropenylrest darstellt,
Y gleich oder verschieden sein kann, ein Wasserstoffatom, die gleiche Bedeutung von R hat, wobei R die oben angegebene Bedeutung hat, oder einen Rest der Formel -OR¹ darstellt, wobei R¹ die oben angegebene Bedeutung hat und
c 0, 1 oder 2, durchschnittlich 0,0 bis 2,0
d 1, 2 oder 3
o 0 oder eine ganze Zahl von 1 bis 100
p 0 oder eine ganze Zahl von 1 bis 100 und
q 0 oder eine ganze Zahl von 1 bis 100 ist,
mit der Maßgabe, daß die Summe o+p+q>0 ist, dadruch gekennzeichnet, daß (A) und (B) durch UV-Licht im Bereich von 200 - 400 nm oder monochromatischer Excimerlampen oder Quecksilbermitteldrucklampen vernetzt werden.

2. Verfahren zum Aufbringen von (Methyl)styrolgruppen aufweisenden Organosiloxanmassen nach Anspruch 1, dadurch gekennzeichnet, daß die (Methyl)styrolgruppen aufweisenden Organosiloxanmassen auf einem Träger hergestellt werden.

## Claims

1. Process for preparing organosiloxane compositions which contain (methyl)styrene groups on the basis of
A) oligomeric or polymeric organosilicon compounds comprising at least one unit of the formula
GR_{c}SiO_{(4-c-1)/2} (I)
or
at least one unit of the formula (I) and at least one unit of the formula
O_{(4-c-1/2)}R_{c}Si-G¹-R_{c}SiO_{(4-c-1)/2} (II)
B) oligomeric or polymeric organosilicon compounds containing on average more than one alkenyloxy, maleate, fumarate, maleimide or (meth)acrylate group, where R are identical or different hydrocarbon radicals which may be halogenated or unhalogenated or a radical of the formula
-R'-[OCH₂CH₂]ₒ-[OCH(CH₃)CH₂]ₚ-[O(CH₂)₄]_{q}-OR'',
where
R' is a linear or branched alkylene radical,
R" is a hydrogen atom, an alkyl radical or a radical of the formula -CO-R''', where R''' is an alkyl radical,
G is a radical of the formula (IV) -R²-(phenyl) which is substituted by [-Y_{(5-d)}] and (-R³_{d}), with the proviso that at least one radical R³ is present and
G¹ is a radical of the formula (V) - (phenyl) - (R²)_{d}-which is substituted by [-Y_{4-d}], where
R² is a linear or branched, substituted or unsubstituted alkylene radical,
R³ is a vinyl radical or isopropenyl radical,
Y can be identical or different and each Y is a hydrogen atom, is as defined for R, where R is as defined above, or a radical of the formula -OR¹, where R¹ is as defined above, and
c is 0, 1 or 2, on average from 0.0 to 2.0,
d is 1, 2 or 3,
o is 0 or an integer from 1 to 100,
p is 0 or an integer from 1 to 100, and
q is 0 or an integer from 1 to 100, with the proviso that the sum o + p + q is > 0, characterized in that (A) and (B) are crosslinked by UV light in the 200 - 400 nm range or from monochromatic excimer lamps or mercury intermediate-pressure lamps.

2. Process for applying organosiloxane compositions containing (methyl)styrene groups according to Claim 1, characterized in that the organosiloxane compositions containing (methyl)styrene groups are prepared on a substrate.

## Revendications

1. Procédé de préparation de compositions d'organosiloxanes renfermant des groupes (méthyl)styrène à base
A) de composés organosiliciés oligomères ou polymères ayant au moins un motif de formule
GR_{c}SiO_{(4-c-1)/2} (I)
ou
au moins un motif de formule (I) et au moins un motif de formule
O_{(4-c-1/2)}R_{c}Si-G¹-R_{c}SiO_{(4-c-1)/2} (II)
B) de composés organosiliciés oligomères ou polymères ayant en moyenne plus d'un groupe alcényloxy, maléate, fumarate, maléimide ou (méth)acrylate,
où R représente des radicaux hydrocarbonés identiques ou différents qui peuvent être halogénés ou non halogénés ou un radical de formule
-R'-[OCH₂CH₂]ₒ-[OCH(CH₃)CH₂]ₚ-[O(CH₂)₄]_{q}-OR"
dans laquelle
R' représente un radical alkylène linéaire ou ramifié,
R" représente un atome d'hydrogène, un radical alkyle ou un radical de formule -CO-R''', dans laquelle R''' représente un radical alkyle,
G représente un radical de formule (IV) -R²-(phényle) qui est substitué par [-Y_{(5-d)}] et (-R³_{d}), à condition qu'au moins un radical R³ soit présent, et
G¹ représente un radical de formule (V) - (phényle)-(R²)_{d} - qui est substitué par [-Y_{4-d}], où
R² représente un radical alkylène linéaire ou ramifié, substitué ou non substitué,
R³ représente un radical vinyle ou un radical isopropényle,
Y peut être identique ou différent et représente un atome d'hydrogène, a la même signification que R, R étant tel que défini ci-dessus, ou représente un radical de formule -OR¹, dans laquelle R¹ est tel que défini ci-dessus, et
c vaut 0, 1 ou 2, en moyenne de 0,0 à 2,0
d vaut 1, 2 ou 3
o vaut 0 ou est un entier de 1 à 100
p vaut 0 ou est un entier de 1 à 100 et
q vaut 0 ou est un entier de 1 à 100,
à condition que la somme o+p+q > 0, caractérisé en ce que (A) et (B) sont réticulés à la lumière UV dans le domaine de 200 à 400 nm ou par des lampes excimères monochromatiques ou des lampes à mercure à pression moyenne.

2. Procédé d'application de compositions d'organosiloxanes renfermant des groupes (méthyl)styrène selon la revendication 1, caractérisé en ce que les compositions d'organosiloxanes renfermant des groupes (méthyl)styrène sont préparées sur un support.
